# EUROPEAN PATENT APPLICATION

(11) **EP 4 838 675 A2**
(43) Date of publication of application: **11.11.2026**
(21) Application number: 26207101.2
(22) Date of filing: 24.09.2026
(51) Int. Cl.: H01M 50/489, H01M 50/105, H01M 50/474

(54) **SECONDARY BATTERY AND ELECTRICAL DEVICE**

(30) Priority: 24.09.2025 CN 202511374439
(71) Applicant: Ningde Amperex Technology Limited, Ningde, Fujian 352100 (CN)
(72) Inventor: HUANG, Zhiqi, Ningde, 352100 (CN); GUO, Peipei, Ningde, 352100 (CN); HUANG, Zeyu, Ningde, 352100 (CN)
(74) Representative: Dehns Germany Partnerschaft mbB

(57) **Abstract**

Some embodiments of this application provide a secondary battery (100) and an electrical device. The secondary battery (100) includes a housing (10), an electrode assembly (20), and a heat shrink film (30). The electrode assembly (20) is disposed in the housing (10). The electrode assembly (20) includes a positive electrode plate, a negative electrode plate, and a separator. The separator is configured to separate the positive electrode plate from the negative electrode plate. The heat shrink film (30) is disposed in the housing (10). The heat shrink film (30) wraps around the electrode assembly (20). A part of the heat shrink film (30) is bonded to an inner wall of the housing (10). One side, oriented toward the electrode assembly (20), of the heat shrink film (30) is free of an adhesive layer. The technical solutions hereof improve safety performance.

## Description

### TECHNICAL FIELD

This application relates to the technical field of secondary batteries, and in particular, to a secondary battery and an electrical device.

### BACKGROUND

With the rapid development of the renewable energy industry, power batteries are advancing continuously toward higher energy density and larger capacity. During manufacturing of a secondary battery, a positive electrode plate, a negative electrode plate, and a separator are stacked to form an electrode assembly. The electrode assembly is placed as a unit inside a housing. To secure the electrode assembly, it is a common practice to bond the electrode assembly to one inner wall of the housing using a hot-melt adhesive. However, when the secondary battery undergoes a drop test, problems such as electrode plate tearing, tab fracture, and separator shrinkage are prone to occur. These problems not only impair battery performance, but also readily give rise to a contact-induced short circuit between an electrode plate and the housing or a contact-induced short circuit between the positive electrode plate and the negative electrode plate, thereby posing risks such as fire and explosion.

### SUMMARY

This application provides a secondary battery and an electrical device, and achieves relatively high safety and reliability.

This application is implemented through the following technical solutions:

According to a first aspect, an embodiment of this application provides a secondary battery. The secondary battery includes a housing, an electrode assembly, and a heat shrink film. The electrode assembly is disposed in the housing. The electrode assembly includes a positive electrode plate, a negative electrode plate, and a separator. The separator is configured to separate the positive electrode plate from the negative electrode plate. The heat shrink film is disposed in the housing. The heat shrink film wraps around the electrode assembly. A part of the heat shrink film is bonded to an inner wall of the housing. No adhesiveness is exhibited between the heat shrink film and the electrode assembly.

In the secondary battery according to this embodiment of this application, a heat shrink film is wrapped around the exterior of the electrode assembly so that the electrode assembly is constrained by the heat shrink film. The side, oriented toward the electrode assembly, of the heat shrink film is free of an adhesive layer. The heat shrink film is bonded to the inner wall of the housing to fix the electrode assembly relative to the housing. When the secondary battery undergoes a drop test, even if the electrode assembly moves relative to the housing, only the heat shrink film is prone to be torn, without exerting any stress on the separator or electrode plates. The separator and electrode plates remain free of tearing, thereby reducing the risk of fire and explosion in the secondary battery, endowing the secondary battery with a high level of safety and reliability, and achieving a high drop test pass rate for the secondary battery.

In one or more optional embodiments, the secondary battery further includes an adhesive member. The heat shrink film is connected to the inner wall of the housing by the adhesive member.

In the above technical solution, the heat shrink film is connected to the inner wall of the housing by the adhesive member, thereby facilitating operation and reducing manufacturing complexity.

In one or more optional embodiments, the adhesive member includes a substrate layer, a first adhesive layer, and a second adhesive layer. The first adhesive layer and the second adhesive layer are located on two sides of the substrate layer respectively in a thickness direction thereof. The first adhesive layer connects the heat shrink film and the substrate layer, and the second adhesive layer connects the substrate layer and the inner wall of the housing.

In the above technical solution, the first adhesive layer and the second adhesive layer are located on two sides of the substrate layer respectively. The adhesive member is double-sided tape, thereby simplifying operations and requiring no drying time. The first adhesive layer connects the heat shrink film to the substrate layer, and the second adhesive layer connects the substrate layer to the inner wall of the housing, thereby facilitating the connection and fixation of the heat shrink film to the inner wall of the housing.

In one or more optional embodiments, an outer surface of the heat shrink film is provided with an adhesive layer. The adhesive layer is bonded to the inner wall of the housing.

In the above technical solution, the adhesive layer is bonded and fixed to the inner wall of the housing, thereby simplifying the structure and reducing the manufacturing cost.

In one or more optional embodiments, the housing is a packaging pouch. The packaging pouch includes a sealing layer. The heat shrink film is heat-seal bonded to the sealing layer.

In the above technical solution, the housing is a packaging pouch, and the secondary battery is a pouch battery. The sealing layer is located on the inner layer of the packaging pouch, and the heat shrink film is heat-seal bonded to the sealing layer, thereby achieving high reliability of connection between the heat shrink film and the packaging pouch.

In one or more optional embodiments, the heat shrink film is provided with a plurality of through-holes. The plurality of through-holes are spaced apart.

In the above technical solution, the plurality of through-holes facilitate the passage of an electrolyte through the heat shrink film, thereby improving the electrolyte infiltration effect, and improving the cycle performance of the secondary battery. The spaced-out arrangement of the plurality of through-holes facilitates the passage of the electrolyte through the heat shrink film at a plurality of locations, thereby improving the electrolyte infiltration effect.

In one or more optional embodiments, the secondary battery satisfies at least one of the following conditions: 1) the through-holes are circular holes, and a diameter of each through-hole is D, satisfying: 1 mm ≤ D ≤ 10 mm; 2) a distance between two adjacent through-holes is P, satisfying: 2 mm ≤ P ≤ 20 mm; or 3) a total area of the through-holes is S1, and an area of the heat shrink film is S2, satisfying: 0.1 ≤ S1/S2 ≤ 0.7.

In the above technical solution, the through-holes are circular holes, thereby facilitating manufacturing and avoiding stress concentration. If the diameter D of the through-holes is excessively small (for example, less than 1 mm), the speed at which the electrolyte passes through the heat shrink film is low and the electrolyte infiltration effect is inferior. If the diameter D of the through-holes is excessively large (for example, greater than 10 mm), the tensile strength of the heat shrink film is low, and the structural stability of the heat shrink film is inferior. Designing the diameter D of the through-holes to satisfy 1 mm ≤ D ≤ 10 mm improves the electrolyte infiltration effect, and at the same time, maintains high structural stability of the heat shrink film.

If the distance P between two adjacent through-holes is excessively small (for example, less than 2 mm), the tensile strength of the heat shrink film is low, the structural stability of the heat shrink film is inferior, and the heat shrink film is prone to damage under stress. If the distance P between two adjacent through-holes is excessively large (for example, greater than 20 mm), the number of through-holes provided on the heat shrink film is small, the flow of electrolyte through the heat shrink film is small, and the electrolyte infiltration effect is inferior. Designing the distance P between two adjacent through-holes to satisfy 2 mm ≤ P ≤ 20 mm endows the heat shrink film with relatively high structural stability, and facilitates the passage of the electrolyte through the heat shrink film, thereby improving the electrolyte infiltration effect.

If a ratio of the total area S1 of the through-holes to the area S2 of the heat shrink film, denoted as S1/S2, is excessively small (for example, less than 0.1), the number of through-holes is small or the diameter of the through-holes is small. Consequently, the flow of electrolyte through the heat shrink film per unit time is small, and the electrolyte infiltration effect is inferior. If the ratio of the total area S1 of the through-holes to the area S2 of the heat shrink film, denoted as S1/S2, is excessively large (for example, greater than 0.7), the number of through-holes is large, or the diameter of the through-holes is large. Consequently, the tensile strength of the heat shrink film is low, the structural stability of the heat shrink film is low, and the heat shrink film is prone to damage under stress. Designing the ratio of the total area S1 of the through-holes to the area S2 of the heat shrink film to satisfy 0.1 ≤ S1/S2 ≤ 0.7 facilitates the passage of a larger amount of electrolyte through the heat shrink film, improves the electrolyte infiltration effect, and achieves high structural stability of the heat shrink film.

In one or more optional embodiments, the heat shrink film is provided with a notch. A corner of the electrode assembly is exposed through the notch.

In the above technical solution, the corner of the electrode assembly is exposed through the notch, and the notch corresponds to the corner of the electrode assembly, thereby preventing excess material from accumulating at a position corresponding to the corner of the electrode assembly after the heat shrink film shrinks, and reducing the impact of such accumulation of excess material on the welding or sealing of the housing.

In one or more optional embodiments, the secondary battery satisfies at least one of the following conditions: 1) along a length direction of the electrode assembly, a length of the notch is L1, and a length of the electrode assembly is L2, satisfying: 0.05 ≤ L1/L2 ≤ 0.20; or 2) along a width direction of the electrode assembly, a width of the notch is W1, and a width of the electrode assembly is W2, satisfying: 0.05 ≤ W1/W2 ≤ 0.20.

In the above technical solution, if the ratio of the length L1 of the notch along the length direction of the electrode assembly to the length L2 of the electrode assembly, denoted as L1/L2, is excessively small (for example, less than 0.05), the notch is excessively short along the length direction of the electrode assembly. Consequently, after heat shrinkage, excess material is prone to accumulate at both ends of the heat shrink film along the length direction of the electrode assembly, thereby causing the two end portions of the heat shrink film along the length direction of the electrode assembly to be prone to interfere with the sealing of the housing, and impairing the safety performance of the secondary battery. If the ratio of the length L1 of the notch along the length direction of the electrode assembly to the length L2 of the electrode assembly, denoted as L1/L2, is excessively large (for example, greater than 0.20), the notch is excessively long along the length direction of the electrode assembly. Consequently, the tensile strength of the heat shrink film is low, the structural stability of the heat shrink film is low, and the separator at the corner of the electrode assembly is prone to shrinkage, thereby leading to a contact-induced short circuit between the electrode plate and the housing or between the positive electrode plate and the negative electrode plate, and resulting in inferior safety performance of the secondary battery. Designing L1/L2 to satisfy 0.05 ≤ L1/L2 ≤ 0.20 prevents excess material from accumulating at a position corresponding to the corner of the electrode assembly after the heat shrink film shrinks, and reduces the impact of such accumulation of excess material on the welding or sealing of the housing. In addition, this configuration enables the heat shrink film to effectively constrain the electrode assembly, thereby reducing the risk that separator shrinkage leads to contact between an electrode plate and the housing or between the positive electrode and the negative electrode, and improving the safety performance of the secondary battery.

If the ratio of the width W1 of the notch along the width direction of the electrode assembly to the width W2 of the electrode assembly, denoted as W1/W2, is excessively small (for example, less than 0.05), the notch is excessively short along the width direction of the electrode assembly. Consequently, after heat shrinkage, excess material is prone to accumulate at both ends of the heat shrink film along the width direction of the electrode assembly, thereby causing the two end portions of the heat shrink film along the width direction of the electrode assembly to be prone to interfere with the sealing of the housing, and impairing the safety performance of the secondary battery. If the ratio of the width W1 of the notch along the width direction of the electrode assembly to the width W2 of the electrode assembly, denoted as W1/W2, is excessively large (for example, greater than 0.20), the notch is excessively long along the width direction of the electrode assembly. Consequently, the tensile strength of the heat shrink film is low, the structural stability of the heat shrink film is low, and the separator at the corner of the electrode assembly is prone to shrinkage, thereby leading to a contact-induced short circuit between the electrode plate and the housing or between the positive electrode plate and the negative electrode plate, and resulting in inferior safety performance of the secondary battery. Designing W1/W2 to satisfy 0.05 ≤ W1/W2 ≤ 0.20 prevents excess material from accumulating at a position corresponding to the corner of the electrode assembly after the heat shrink film shrinks, and reduces the impact of such accumulation of excess material on the welding or sealing of the housing. In addition, this configuration enables the heat shrink film to effectively constrain the electrode assembly, thereby reducing the risk that separator shrinkage leads to contact between an electrode plate and the housing or between the positive electrode and the negative electrode, and improving the safety performance of the secondary battery.

In one or more optional embodiments, a material of the heat shrink film includes one or more of a polyvinyl chloride-based material, a polyolefin-based material, a polyester-based material, a polyamide-based material, or a fluoropolymer-based material.

In the above technical solution, the polyvinyl chloride-based material, polyolefin-based material, polyester-based material, polyamide-based material, or fluoropolymer-based material are well resistant to chemical corrosion and are thermoplastic, electrically insulating, and lightweight, thereby facilitating transportation and processing.

In one or more optional embodiments, a thickness of the heat shrink film is H, satisfying: 0.013 mm ≤ H ≤ 0.130 mm.

In the above technical solution, if the thickness of the heat shrink film is excessively small (for example, less than 0.013 mm), the tensile strength of the heat shrink film is low, and the heat shrink film is prone to damage under stress. If the thickness of the heat shrink film is excessively large (for example, greater than 0.130 mm), the heat shrink film is costly, and the heat shrink film occupies a large amount of assembly space, thereby impairing the energy density of the secondary battery. Designing the thickness H of the heat shrink film to satisfy 0.013 mm ≤ H ≤ 0.130 mm ensures that the heat shrink film is cost-effective while possessing high tensile strength, reduces the assembly space occupied by the heat shrink film, and achieves a relatively high energy density of the secondary battery.

According to a second aspect, an embodiment of this application further provides an electrical device. The electrical device includes the secondary battery provided in any one of the above embodiments. The secondary battery is configured to provide electrical energy.

Additional aspects and advantages of this application will be partly given in the following description, and a part thereof will become evident in the following description or will be learned in the practice of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a cutaway perspective view of a secondary battery according to some embodiments of this application;
FIG. 2 is a schematic diagram of assembling status of a heat shrink film and an electrode assembly according to some embodiments of this application;
FIG. 3 is a side view of assembling status of a heat shrink film and an electrode assembly according to some embodiments of this application;
FIG. 4 is a schematic structural diagram of an adhesive member according to some embodiments of this application; and
FIG. 5 is a schematic diagram of assembling status of a heat shrink film and an electrode assembly according to other embodiments of this application.

List of reference signs: 100-secondary battery; 10-housing; 20-electrode assembly; 21-corner; 30-heat shrink film; 31-through-hole; 32-notch; 33-clearance portion; 40-adhesive member; 41-substrate layer; 42-first adhesive layer; 43-second adhesive layer; 51-positive tab; 52-negative tab; X-first direction; Y-second direction; Z-third direction.

### DETAILED DESCRIPTION

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

As used herein, the term "and/or" indicates merely a relation between related items, and represents three possible relationships. For example, "A and/or B" may represent the following three circumstances: A alone, both A and B, and B alone. In addition, the character "/" herein generally indicates an "or" relationship between the item preceding the character and the item following the character. In some cases, the character "/" indicates a ratio between two values before and after it.

"A plurality of" referred to in this application means two or more (including two). Similarly, "a plurality of groups" means two or more groups (including two groups), and "a plurality of pieces" means two or more pieces (including two pieces).

A secondary battery includes a housing, an electrode assembly, and an electrolyte. The housing is configured to accommodate the electrode assembly and the electrolyte. The electrode assembly includes a positive electrode plate, a negative electrode plate, and a separator. The electrode assembly works primarily by shuttling metal ions between the positive electrode plate and the negative electrode plate. The positive electrode plate includes a positive current collector and a positive active material layer. A surface of the positive current collector is coated with the positive active material layer. A part, not coated with the positive active material layer, of the positive current collector serves as a positive tab. Alternatively, the positive tab may be a metal strip welded to the surface of the positive current collector, so as to input or output electrical energy of the positive electrode plate through the positive tab. Using a lithium-ion battery as an example, the positive current collector may be made of aluminum, and a positive active material may be lithium cobalt oxide, lithium iron phosphate, a ternary material, lithium manganese oxide, or the like. The negative electrode plate includes a negative current collector and a negative active material layer. A surface of the negative current collector is coated with the negative active material layer. A part, not coated with the negative active material layer, of the negative current collector serves as a negative tab. Alternatively, the negative tab may be a metal strip welded to the surface of the negative current collector, so as to input or output electrical energy of the negative electrode plate through the negative tab. The negative current collector may be made of copper, and the negative active material may be a carbon material, a silicon material, or the like.

The separator may be made of polypropylene (PP), polyethylene (PE), or another material. In addition, the electrode assembly may assume a winding structure or a stacked structure. The structure of the electrode assembly is not limited herein.

The housing may be a rigid metal shell, such as a steel shell; or may be a flexible shell, such as a packaging pouch.

Currently, the market trend shows that secondary batteries are applied more extensively. Secondary batteries are widely applied to electric means of transport such as electric bicycles, electric motorcycles, and electric vehicles, and in many other fields such as electric tools, unmanned aerial vehicles, and energy storage devices. The market demand for secondary batteries keeps soaring with the increase of the application fields of the batteries.

Currently, in a process of assembling a secondary battery, an electrode assembly is bonded and fixed to an inner wall of a housing by means of double-sided tape or other structures, so as to constrain movement of an electrode assembly relative to the housing. However, when the secondary battery undergoes a drop test, problems such as electrode plate tearing, tab fracture, and separator shrinkage are prone to occur. These problems not only impair battery performance, but also readily give rise to a contact-induced short circuit between an electrode plate and the inner wall of the housing or a contact-induced short circuit between the positive electrode plate and the negative electrode plate, thereby posing risks such as fire and explosion.

In view of the above situation, in order to address the risk of short-circuiting caused by contact between the positive electrode and the negative electrode that occurs when the movement of the electrode assembly leads to electrode plate tearing, tab fracture, and separator shrinkage during a drop test of a secondary battery, an embodiment of this application provides a secondary battery. The secondary battery includes a housing, an electrode assembly, and a heat shrink film. The electrode assembly is disposed in the housing. The electrode assembly includes a positive electrode plate, a negative electrode plate, and a separator. The separator is configured to separate the positive electrode plate from the negative electrode plate. The heat shrink film is disposed in the housing. The heat shrink film wraps around the electrode assembly. A part of the heat shrink film is bonded to an inner wall of the housing. One side, oriented toward the electrode assembly, of the heat shrink film is free of an adhesive layer.

In such a secondary battery, a heat shrink film is wrapped around the exterior of the electrode assembly so that the electrode assembly is constrained by the heat shrink film. No adhesiveness is provided between the heat shrink film and the electrode assembly. The heat shrink film is bonded to the inner wall of the housing to fix the electrode assembly relative to the housing. When the secondary battery undergoes a drop test, even if the electrode assembly moves relative to the housing, only the heat shrink film is prone to be torn, without exerting any stress on the separator or electrode plates. The separator and electrode plates remain free of tearing, thereby reducing the risk of fire and explosion in the secondary battery, endowing the secondary battery with a high level of safety and reliability, and achieving a high drop test pass rate for the secondary battery.

An embodiment of this application provides an electrical device that uses a secondary battery as a power supply. The electrical device may be, but is not limited to, a mobile phone, a tablet, a laptop computer, an electric toy, an electric tool, an electric power cart, an electric vehicle, a ship, a spacecraft, or the like.

The secondary battery may be, but is not limited to, a lithium-ion battery, a sodium-ion battery, or a magnesium-ion battery. The secondary battery may be flat, cuboidal, or otherwise shaped.

The following describes the structure of a secondary battery according to an embodiment of this application with reference to drawings.

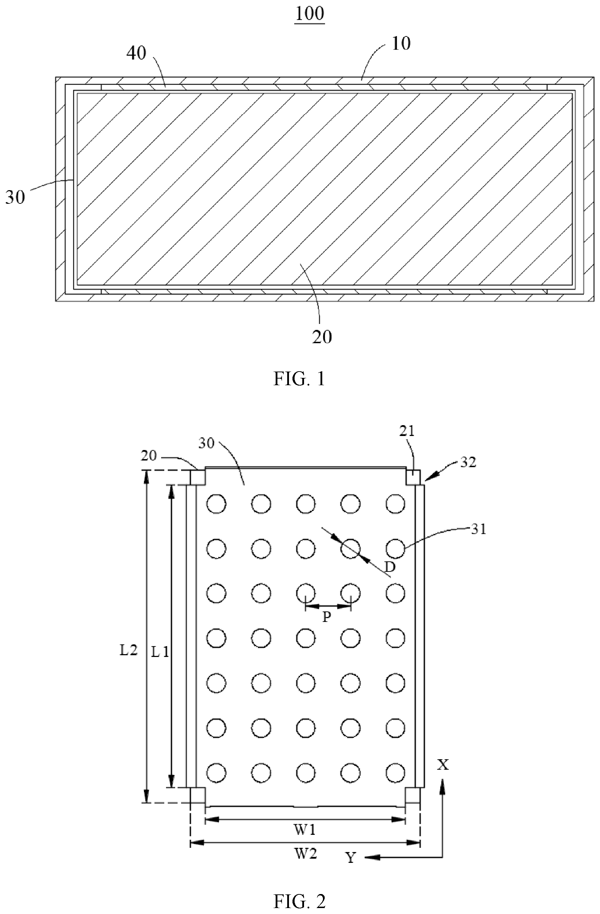

Referring to FIG. 1 to FIG. 3, an embodiment of this application provides a secondary battery 100. The secondary battery includes a housing 10, an electrode assembly 20, and a heat shrink film 30.

The housing 10 is configured to provide an accommodation space to accommodate the electrode assembly 20 and an electrolyte.

In some embodiments, the housing 10 may be a rigid metal housing, and the secondary battery 100 may be a hard-shell battery. For example, the housing 10 is a steel housing, an aluminum alloy housing, or the like.

In some embodiments, the housing 10 may be packaging pouch, and the secondary battery 100 is a pouch battery. For example, the packaging pouch may be an aluminum laminated film or the like.

The electrode assembly 20 is disposed in the housing 10. The electrode assembly 20 includes a positive electrode plate, a negative electrode plate, and a separator. The separator is configured to separate the positive electrode plate from the negative electrode plate.

In some embodiments, the electrode assembly 20 may be a winding structure, and the positive electrode plate, the separator, and the negative electrode plate are sequentially stacked and wound to form the electrode assembly 20. In other embodiments, the electrode assembly 20 may be a stacked structure, and the positive electrode plate, the separator, and the negative electrode plate are stacked in sequence to form an electrode assembly 20 unit, and then a plurality of electrode assembly 20 units are stacked to form an electrode assembly 20.

The separator is disposed between the positive electrode plate and the negative electrode plate. The separator possesses electrical insulation properties, and is configured to prevent the positive electrode plate from directly contacting the negative electrode plate, thereby reducing the risk of a short circuit between the positive electrode plate and the negative electrode plate. The separator is permeable to electrolyte, so as to facilitate movement of metal ions between the positive electrode plate and the negative electrode plate.

The heat shrink film 30 is disposed in the housing 10. The heat shrink film 30 wraps around the electrode assembly 20. A part of the heat shrink film 30 is bonded to an inner wall of the housing 10. One side, oriented toward the electrode assembly 20, of the heat shrink film 30 is free of an adhesive layer.

The heat shrink film 30 is a thermoplastic material that implements product packaging and protection by shrinking upon heating, and possesses high flexibility, puncture resistance, and high elongation.

The heat shrink film 30 is disposed inside the housing 10. The heat shrink film 30 wraps around the exterior of the electrode assembly 20 so as to constrain and shape the electrode assembly 20.

During assembling of the secondary battery 100, the heat shrink film 30 wraps around at least a part of the outer surface of the electrode assembly 20, and the heat shrink film 30 wraps around the electrode assembly 20 at least one full turn. For example, the electrode assembly 20 is cuboidal, and the electrode assembly 20 includes two first surfaces disposed opposite to each other along a first direction X, two second surfaces disposed opposite to each other along a second direction Y, and two third surfaces disposed opposite to each other along a third direction Z. The heat shrink film 30 wraps around the two first surfaces, the two second surfaces, and the two third surfaces. The first direction X may be parallel to the length direction of the electrode assembly 20. The second direction Y may be parallel to the width direction of the electrode assembly 20. The third direction Z may be parallel to the thickness direction of the electrode assembly 20. When the electrode assembly 20 is a stacked structure, the thickness direction of the electrode assembly 20 may be parallel to the stacking direction of the electrode plates. When the electrode assembly 20 is a winding structure and the electrode assembly 20 is flat in shape, the electrode assembly 20 may include a straight portion and two bent portions. The straight portion connects the two bent portions. At the straight portion, the electrode plates are stacked along the third direction Z.

A part of the heat shrink film 30 may be bonded to the inner wall of the housing 10 in various manners. For example, a part of the heat shrink film 30 may be connected to the inner wall of the housing 10 by heat fusion, or a part of the heat shrink film 30 may be bonded to the inner wall of the housing 10 by means of an adhesive member. The inner wall of the housing 10 refers to a wall portion of the housing 10, the wall portion defining an accommodation space.

No adhesiveness is provided between the heat shrink film 30 and the electrode assembly 20. A surface, oriented toward the electrode assembly 20, of the heat shrink film 30 is non-adhesive, and the heat shrink film 30 is in contact with, but not adhesively connected to, the electrode assembly 20. For example, when the heat shrink film 30 ruptures, the electrode assembly 20 can move relative to the heat shrink film 30, but the heat shrink film 30 does not tear the separator or the electrode plates.

In the secondary battery 100 according to this embodiment of this application, a heat shrink film 30 is wrapped around the exterior of the electrode assembly 20 so that the electrode assembly 20 is constrained by the heat shrink film 30. No adhesive layer is provided between the heat shrink film 30 and the electrode assembly 20. The heat shrink film 30 is bonded to the inner wall of the housing 10 to fix the electrode assembly 20 relative to the housing 10. When the secondary battery 100 undergoes a drop test, even if the electrode assembly 20 moves relative to the housing 10, only the heat shrink film 30 is prone to be torn, without exerting any stress on the separator or electrode plates. The separator and electrode plates remain free of tearing, thereby reducing the risk of fire and explosion in the secondary battery 100, endowing the secondary battery 100 with a high level of safety and reliability, and achieving a high drop test pass rate for the secondary battery 100.

Referring to FIG. 1, in one or more optional embodiments, the secondary battery 100 further includes an adhesive member 40. The heat shrink film 30 is connected to the inner wall of the housing 10 by the adhesive member 40.

In some embodiments, the adhesive member 40 may be an adhesive connecting component. For example, the adhesive member 40 may be glue, or the adhesive member 40 may be double-sided tape.

The heat shrink film 30 is connected to the inner wall of the housing 10 by the adhesive member 40. During assembling of the secondary battery 100, the adhesive member 40 may first be applied to an outer surface of the heat shrink film 30, and then the heat shrink film 30 provided with the adhesive member 40 is fitted to the inner wall of the housing 10, so that the heat shrink film 30 is connected to the inner wall of the housing 10 by the adhesive member 40. Alternatively, during assembling of the secondary battery 100, the adhesive member 40 may first be applied to the inner wall of the housing 10, and then the heat shrink film 30 is fitted to the inner wall of the housing 10, so that the heat shrink film 30 is connected to the inner wall of the housing 10 by the adhesive member 40.

In the above technical solution, the heat shrink film 30 is connected to the inner wall of the housing 10 by the adhesive member 40, thereby facilitating operation and reducing the manufacturing complexity.

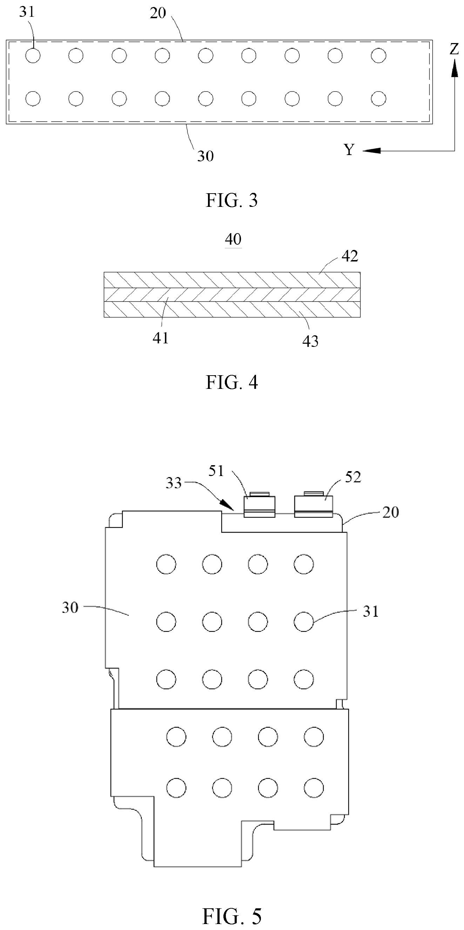

Referring to FIG. 4, in one or more optional embodiments, the adhesive member 40 includes a substrate layer 41, a first adhesive layer 42, and a second adhesive layer 43. The first adhesive layer 42 and the second adhesive layer 43 are located on two sides of the substrate layer 41 respectively in a thickness direction thereof. The first adhesive layer 42 connects the heat shrink film 30 and the substrate layer 41, and the second adhesive layer 43 connects the substrate layer 41 and the inner wall of the housing 10.

The first adhesive layer 42, the substrate layer 41, and the second adhesive layer 43 are distributed in sequence along the thickness direction of the adhesive member 40 to form adhesive interfaces on opposite sides of the substrate layer 41, such that the adhesive member 40 constitutes double-sided tape.

In some embodiments, the material of the substrate layer 41 may be selected from, but is not limited to, a polypropylene film, a polyethylene film, a polyethylene terephthalate film, a polyimide film, a polyvinyl chloride film, a multilayer co-extruded polyolefin heat shrink film 30, or a combination thereof. The thickness of the substrate layer 41 may be a value within the range of 6 µm to 30 µm. If the thickness of the substrate layer 41 is excessively low, the process requirements become more demanding and implementation becomes more difficult. If the thickness of the substrate layer 41 is excessively high, the overall thickness of the adhesive member 40 is adversely affected, thereby adversely affecting the overall thickness and energy density of the secondary battery 100.

In some embodiments, the adhesive strength of the first adhesive layer 42 at normal temperature is greater than 100 N/mm. The material of the first adhesive layer 42 may be selected from, but is not limited to, polyacrylate ester, epoxy resin, rubber, hot-melt adhesive, silicone, or a combination thereof. The material of the second adhesive layer 43 may be a hot-melt adhesive. The second adhesive layer 43 is non-adhesive at normal temperature and becomes adhesive upon heating, and the adhesive strength after heating is greater than 60 N/m.

The adhesive strength is measured by setting a specimen to a width of 15 mm and by stretching the specimen at 180° at normal temperature using a GoTech tensile machine at a speed of 50 mm/min.

In the above technical solution, the first adhesive layer 42 and the second adhesive layer 43 are located on two sides of the substrate layer 41 respectively. The adhesive member 40 is double-sided tape, thereby simplifying operations and requiring no drying time. The first adhesive layer 42 connects the heat shrink film 30 to the substrate layer 41, and the second adhesive layer 43 connects the substrate layer 41 to the inner wall of the housing 10, thereby facilitating the connection and fixation of the heat shrink film 30 to the inner wall of the housing 10.

In one or more optional embodiments, an outer surface of the heat shrink film 30 is provided with an adhesive layer. The adhesive layer is bonded to the inner wall of the housing 10.

The adhesive layer may be an adhesive structure formed on the outer surface of the heat shrink film 30. For example, the adhesive layer is an adhesive layer formed by coextruding the heat shrink film 30.

The adhesive layer may possess high adhesiveness at normal temperature, or the adhesive layer may be a hot-melt adhesive layer.

In the above technical solution, the adhesive layer is bonded and fixed to the inner wall of the housing 10, thereby simplifying the structure and reducing the manufacturing cost.

In one or more optional embodiments, the housing 10 is a packaging pouch. The packaging pouch includes a sealing layer. The heat shrink film 30 is heat-seal bonded to the sealing layer.

In some embodiments, the packaging pouch may be a pouch-shaped structure formed by sealing with a sealing film (such as an aluminum laminated film), and the secondary battery 100 is a pouch battery.

In some embodiments, the packaging pouch includes a sealing layer, a metal layer, and an outer layer that are stacked. The metal layer is disposed between the sealing layer and the outer layer. The outer layer is located at the outermost layer of the packaging pouch. The outer layer may be a nylon layer or a composite layer compounded of polyester resin and nylon, and serves a protective function against contamination, corrosion, and damage from external forces. The metal layer may include one of aluminum or steel, serves waterproofing and partitioning functions, and enables shaping of the packaging pouch. The sealing layer is a heat-seal layer. The sealing layer may include a polymer. The polymer includes one of polypropylene or polyethylene. The sealing layer is configured to seal the packaging pouch by hot pressing, and to separate the metal layer from the electrode assembly 20, thereby reducing the risk that the electrolyte leaks in the packaging pouch and corrodes the metal layer.

In a process of fitting the heat shrink film 30 to the housing 10, the heat shrink film 30 is heat-seal bonded to the sealing layer of the housing 10 by means of heat fusion.

In the above technical solution, the housing 10 is a packaging pouch, and the secondary battery 100 is a pouch battery. The sealing layer is located on the inner layer of the packaging pouch, and the heat shrink film 30 is heat-seal bonded to the sealing layer, thereby achieving high reliability of connection between the heat shrink film 30 and the packaging pouch.

In one or more optional embodiments, the heat shrink film 30 is provided with a plurality of through-holes 31. The plurality of through-holes 31 are spaced apart.

The through-holes 31 penetrate the heat shrink film 30 along the thickness direction of the heat shrink film 30. The through-holes 31 connect the outer surface and the inner surface of the heat shrink film 30.

The plurality of through-holes 31 may be arranged in various configurations. For example, distances between any two adjacent through-holes 31 are equal, such as a configuration in which the plurality of through-holes 31 are distributed in a matrix. As another example, the distances between two adjacent through-holes 31 are different, and the plurality of through-holes 31 are distributed in a scattered manner.

In some embodiments, the plurality of through-holes 31 are distributed in a matrix. When the heat shrink film 30 is in an unfolded state, the heat shrink film 30 may be an elongated thin film.

In some embodiments, the plurality of through-holes 31 may assume the same shape or different shapes.

In the above technical solution, the plurality of through-holes 31 facilitate the passage of an electrolyte through the heat shrink film 30, thereby improving the electrolyte infiltration effect, and improving the cycle performance of the secondary battery 100. The spaced-out arrangement of the plurality of through-holes 31 facilitates the passage of the electrolyte through the heat shrink film 30 at a plurality of locations, thereby improving the electrolyte infiltration effect.

Referring to FIG. 2, in one or more optional embodiments, the through-holes 31 are circular holes, and a diameter of each through-hole 31 is D, satisfying: 1 mm ≤ D ≤ 10 mm;

The circular shape of the through-holes 31 facilitates manufacturing and avoids stress concentration.

The diameter of the through holes 31 may be measured using an optical measuring instrument.

If the diameter D of the through-holes 31 is excessively small (for example, less than 1 mm), the speed at which the electrolyte passes through the heat shrink film 30 is low and the electrolyte infiltration effect is inferior. If the diameter D of the through-holes 31 is excessively large (for example, greater than 10 mm), the tensile strength of the heat shrink film 30 is low, and the structural stability of the heat shrink film 30 is inferior.

Designing the diameter D of the through-holes 31 to satisfy 1 mm ≤ D ≤ 10 mm improves the electrolyte infiltration effect, and at the same time, maintains high structural stability of the heat shrink film 30.

In some embodiments, the diameter D of the through-holes 31 may be, but is not limited to, any one of 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 7.5 mm, 8.0 mm, 8.5 mm, 9.0 mm, 9.5 mm, 10.0 mm, or a value falling within a range formed by any two thereof.

In one or more optional embodiments, the distance between two adjacent through-holes 31 is P, satisfying: 2 mm ≤ P ≤ 20 mm.

The distance between two adjacent through-holes 31 is a distance between the centerlines of the two adjacent through-holes 31.

If the distance P between two adjacent through-holes 31 is excessively small (for example, less than 2 mm), the tensile strength of the heat shrink film 30 is low, the structural stability of the heat shrink film 30 is inferior, and the heat shrink film 30 is prone to damage under stress. If the distance P between two adjacent through-holes 31 is excessively large (for example, greater than 20 mm), the number of through-holes 31 provided on the heat shrink film 30 is small, the flow of electrolyte through the heat shrink film 30 is small, and the electrolyte infiltration effect is inferior.

Designing the distance P between two adjacent through-holes 31 to satisfy 2 mm ≤ P ≤ 20 mm endows the heat shrink film 30 with relatively high structural stability, and facilitates the passage of the electrolyte through the heat shrink film 30, thereby improving the electrolyte infiltration effect.

In some embodiments, the distance P between two adjacent through-holes 31 may be, but is not limited to, any one of 2.0 mm, 2.5 mm, 3.0 mm, 3.5 mm, 4.0 mm, 4.5 mm, 5.0 mm,..., 15.5 mm, 16.0 mm, 16.5 mm, 17.0 mm, 17.5 mm, 18.0 mm, 18.5 mm, 19.0 mm, 19.5 mm, 20 mm, or a value falling within a range formed by any two thereof.

In one or more optional embodiments, a total area of the through-holes 31 is S1, and an area of the heat shrink film 30 is S2, satisfying: 0.1 ≤ S1/S2 ≤ 0.7.

The area of the through-holes 31 and the area of the heat shrink film 30 may be measured using an optical measuring instrument.

If a ratio of the total area S1 of the through-holes 31 to the area S2 of the heat shrink film 30, denoted as S1/S2, is excessively small (for example, less than 0.1), the number of through-holes 31 is small or the diameter of the through-holes 31 is small. Consequently, the flow of electrolyte through the heat shrink film 30 per unit time is small, and the electrolyte infiltration effect is inferior. If the ratio of the total area S1 of the through-holes 31 to the area S2 of the heat shrink film 30, denoted as S1/S2, is excessively large (for example, greater than 0.7), the number of through-holes 31 is large, or the diameter of the through-holes 31 is large. Consequently, the tensile strength of the heat shrink film 30 is low, the structural stability of the heat shrink film 30 is low, and the heat shrink film 30 is prone to damage under stress.

Designing the ratio of the total area S1 of the through-holes 31 to the area S2 of the heat shrink film 30 to satisfy 0.1 ≤ S1/S2 ≤ 0.7 facilitates the passage of a larger amount of electrolyte through the heat shrink film 30, improves the electrolyte infiltration effect, and achieves high structural stability of the heat shrink film 30.

Referring to FIG. 2, in one or more optional embodiments, the heat shrink film 30 is provided with a notch 32. A corner 21 of the electrode assembly 20 is exposed through the notch 32.

The notch 32 is a void formed at the edge of an object due to material absence. The notch 32 may be provided at each intersection between a plurality of intersecting surfaces of the electrode assembly 20.

The corners 21 of the electrode assembly 20 are locations at which a plurality of surfaces of the electrode assembly 20 meet. For example, when the electrode assembly 20 is cuboidal, the electrode assembly 20 includes four corners 21.

After the heat shrink film 30 wraps around the electrode assembly 20, the notches 32 correspond to the corners 21 of the electrode assembly 20, such that the corners 21 of the electrode assembly 20 are exposed through the notches 32.

Because the heat shrink film 30 wraps around the electrode assembly 20, when the heat shrink film 30 shrinks, excess material is prone to accumulate on the heat shrink film 30 at positions corresponding to the corners 21 of the electrode assembly 20. For hard-shell batteries, such excess material accumulation is prone to cause the heat shrink film 30 to encroach into a welding region of the housing 10, thereby adversely affecting the weld sealing effect of the housing 10, posing risks such as electrolyte leakage, and resulting in inferior safety performance of the secondary battery 100. For pouch batteries, such excess material accumulation is prone to cause the heat shrink film 30 to encroach into a seal region of the housing 10, thereby adversely affecting the sealing effect, posing risks such as electrolyte leakage, and resulting in inferior safety performance of the secondary battery 100.

In the above technical solution, the corner 21 of the electrode assembly 20 is exposed through the notch 32, and the notch 32 corresponds to the corner 21 of the electrode assembly 20, thereby preventing excess material from accumulating at a position corresponding to the corner 21 of the electrode assembly 20 after the heat shrink film 30 shrinks, and reducing the impact of such accumulation of excess material on the welding or sealing of the housing 10.

Referring to FIG. 2, in one or more optional embodiments, along the length direction of the electrode assembly 20, the length of the notch 32 is L1, and the length of the electrode assembly 20 is L2, satisfying: 0.05 ≤ L1/L2 ≤ 0.20.

If the ratio of the length L1 of the notch 32 along the length direction of the electrode assembly 20 to the length L2 of the electrode assembly 20, denoted as L1/L2, is excessively small (for example, less than 0.05), the notch 32 is excessively short along the length direction of the electrode assembly 20. Consequently, after heat shrinkage, excess material is prone to accumulate at both ends of the heat shrink film 30 along the length direction of the electrode assembly 20, thereby causing the two end portions of the heat shrink film 30 along the length direction of the electrode assembly 20 to be prone to interfere with the sealing of the housing 10, and impairing the safety performance of the secondary battery 100. If the ratio of the length L1 of the notch 32 along the length direction of the electrode assembly 20 to the length L2 of the electrode assembly 20, denoted as L1/L2, is excessively large (for example, greater than 0.20), the notch 32 is excessively long along the length direction of the electrode assembly 20. Consequently, the tensile strength of the heat shrink film 30 is low, the structural stability of the heat shrink film 30 is low, and the separator at the corner 21 of the electrode assembly 20 is prone to shrinkage, thereby leading to a contact-induced short circuit between the electrode plate and the housing 10 or between the positive electrode plate and the negative electrode plate, and resulting in inferior safety performance of the secondary battery 100.

Designing L1/L2 to satisfy 0.05 ≤ L1/L2 ≤ 0.20 prevents excess material from accumulating at a position corresponding to the corner 21 of the electrode assembly 20 after the heat shrink film 30 shrinks, and reduces the impact of such accumulation of excess material on the welding or sealing of the housing 10. In addition, this configuration enables the heat shrink film 30 to effectively constrain the electrode assembly 20, thereby reducing the risk that separator shrinkage leads to contact between an electrode plate and the housing 10 or between the positive electrode and the negative electrode, and improving the safety performance of the secondary battery 100.

In some embodiments, L1/L2 may be, but is not limited to, any one of 0.05, 0.08, 0.10, 0.12, 0.15, 0.18, 0.20, or a value falling within a range formed by any two thereof.

In one or more optional embodiments, along the width direction of the electrode assembly 20, the width of the notch 32 is W1, and the width of the electrode assembly 20 is W2, satisfying: 0.05 ≤ W1/W2 ≤ 0.20.

If the ratio of the width W1 of the notch 32 along the width direction of the electrode assembly 20 to the width W2 of the electrode assembly 20, denoted as W1/W2, is excessively small (for example, less than 0.05), the notch 32 is excessively short along the width direction of the electrode assembly 20. Consequently, after heat shrinkage, excess material is prone to accumulate at both ends of the heat shrink film 30 along the width direction of the electrode assembly 20, thereby causing the two end portions of the heat shrink film 30 along the width direction of the electrode assembly 20 to be prone to interfere with the sealing of the housing 10, and impairing the safety performance of the secondary battery 100. If the ratio of the width W1 of the notch 32 along the width direction of the electrode assembly 20 to the width W2 of the electrode assembly 20, denoted as W1/W2, is excessively large (for example, greater than 0.20), the notch 32 is excessively long along the width direction of the electrode assembly 20. Consequently, the tensile strength of the heat shrink film 30 is low, the structural stability of the heat shrink film 30 is low, and the separator at the corner 21 of the electrode assembly 20 is prone to shrinkage, thereby leading to a contact-induced short circuit between the electrode plate and the housing 10 or between the positive electrode plate and the negative electrode plate, and resulting in inferior safety performance of the secondary battery 100.

Designing W1/W2 to satisfy 0.05 ≤ W1/W2 ≤ 0.20 prevents excess material from accumulating at a position corresponding to the corner 21 of the electrode assembly 20 after the heat shrink film 30 shrinks, and reduces the impact of such accumulation of excess material on the welding or sealing of the housing 10. In addition, this configuration enables the heat shrink film 30 to effectively constrain the electrode assembly 20, thereby reducing the risk that separator shrinkage leads to contact between an electrode plate and the housing 10 or between the positive electrode and the negative electrode, and improving the safety performance of the secondary battery 100.

In some embodiments, W1/W2 may be, but is not limited to, any one of 0.05, 0.08, 0.10, 0.12, 0.15, 0.18, 0.20, or a value falling within a range formed by any two thereof.

Referring to FIG. 5, in some embodiments, the secondary battery 100 further includes a positive tab 51 and a negative tab 52. The positive tab 51 is electrically connected to the positive current collector, and the negative tab 52 is electrically connected to the negative current collector; or, the positive tab 51 is a part of the positive current collector, and the negative tab 52 is a part of the negative current collector. The heat shrink film 30 includes a clearance portion 33 that provides clearance for the positive tab 51 and the negative tab 52. The positive tab 51 and the negative tab 52 are exposed at the clearance portion 33, so as to reduce the risk of interference between the heat shrink film 30 and the positive tab 51 and negative tab 52.

In one or more optional embodiments, the material of the heat shrink film 30 includes one or more of a polyvinyl chloride-based material, a polyolefin-based material, a polyester-based material, a polyamide-based material, or a fluoropolymer-based material.

In the above technical solution, the polyvinyl chloride-based material, polyolefin-based material, polyester-based material, polyamide-based material, or fluoropolymer-based material are well resistant to chemical corrosion and are thermoplastic, electrically insulating, and lightweight, thereby facilitating transportation and processing.

In one or more optional embodiments, the thickness of the heat shrink film 30 is H, satisfying: 0.013 mm ≤ H ≤ 0.130 mm.

The thickness of the heat shrink film 30 may be measured using a sub-micron micrometer.

If the thickness of the heat shrink film 30 is excessively small (for example, less than 0.013 mm), the tensile strength of the heat shrink film 30 is low, and the heat shrink film 30 is prone to damage under stress. If the thickness of the heat shrink film 30 is excessively large (for example, greater than 0.130 mm), the heat shrink film 30 is costly, and the heat shrink film 30 occupies a large amount of assembly space, thereby impairing the energy density of the secondary battery 100. Designing the thickness H of the heat shrink film 30 to satisfy 0.013 mm ≤ H ≤ 0.130 mm ensures that the heat shrink film 30 is cost-effective while possessing high tensile strength, reduces the assembly space occupied by the heat shrink film 30, and achieves a relatively high energy density of the secondary battery 100.

In some embodiments, the thickness H of the heat shrink film 30 may be, but is not limited to, any one of 0.013 mm, 0.014 mm, 0.015 mm, 0.016 mm,..., 0.125 mm, 0.126 mm, 0.127 mm, 0.128 mm, 0.129 mm, 0.130 mm, or a value falling within a range formed by any two thereof.

In one or more optional embodiments, the heat shrink film 30 may be a one-piece structure, or, the heat shrink film 30 may be a spliced structure consisting of two or more sections.

According to some embodiments of this application, an embodiment of this application further provides an electrical device. The electrical device includes the secondary battery 100 disclosed in any one of the above embodiments. The secondary battery 100 is configured to provide electrical energy.

The electrical device may be any device or system that uses the secondary battery 100 as a power supply.

During manufacturing of the secondary battery, the heat shrink film is fitted over the electrode assembly or placed to cover the two large faces of the electrode assembly, and the electrode assembly is baked at a temperature of 85°C to 120°C for a period of 0.05 min to 10 min, so that the heat shrink film wraps around the electrode assembly.

To verify the effects of the notches and through-holes on the performance of the secondary battery, the following experiments are performed:

### 1. Drop test

Pre-treating a secondary battery at 25 °C, leaving the secondary battery to stand for 60 minutes at normal temperature, and then measuring the voltage of the secondary battery before the drop test. Fixing the secondary battery into a jig, subjecting the battery to free-fall drops from different heights above the ground by using a drop tester, and letting the six surfaces, right head corner, right tail corner, left head corner, and left tail corner of the battery hit the landing point sequentially (at an angle of 45°±15°), thereby completing one round. Repeating the free-fall drops for a plurality of rounds. Stopping the test upon the occurrence of smoke or electrolyte leakage.

### 2. Lithium plating test

Leaving a secondary battery to stand at a 25 °C test temperature for 30 minutes, and then charging the battery to 4.53 V progressively according to the following charging steps:
(1) 4C CC to 4.3 V, CV to 3.2C;
(2) 3.2C CC to 4.35 V, CV to 2.5C;
(3) 2.5C CC to 4.4 V, CV to 2C;
(4) 2C CC to 4.45 V, CV to 1.5C; and
(5) 1.5C CC to 4.53 V, CV to 0.28C.

Leaving the battery to stand for 30 minutes, and then discharging the battery according to the following steps:
(1) 1.5C DC to 3.3 V; and
(2) 0.7C DC to 3 V.

The above charge-discharge process is one cycle. Repeating the above steps for 500 cycles, and then disassembling the battery that is in a fully charged state (the fully charged state means that the battery reaches a nominal voltage of 4.53 V) and taking out a negative electrode plate. Determining the percentage of the lithium plating area of the negative electrode plate.

**Table 1**

| | W2 | L2 | L1/L2 | W1/W2 | Drop test result |
|---|---|---|---|---|---|
| Embodiment 1 | 40 | 80 | 0.05 | 0.05 | No smoke or electrolyte leakage occurs over 5 rounds of drop tests performed from a height of 1.8 m above the ground |
| Embodiment 2 | 40 | 80 | 0.1 | 0.1 | No smoke or electrolyte leakage occurs over 5 rounds of drop tests performed from a height of 1.5 m above the ground |
| Embodiment 3 | 40 | 80 | 0.2 | 0.2 | No smoke or electrolyte leakage occurs over 3 rounds of drop tests performed from a height of 1.5 m above the ground |
| Embodiment 4 | 40 | 80 | 0.01 | 0.01 | No smoke or electrolyte leakage occurs over 4 rounds of drop tests performed from a height of 1.0 m above the ground |
| Embodiment 5 | 40 | 80 | 0.25 | 0.25 | No smoke or electrolyte leakage occurs over 5 rounds of drop tests performed from a height of 1.0 m above the ground |
| Comparative Embodiment (without heat shrink film) | 40 | 80 | / | / | No smoke or electrolyte leakage occurs over 3 rounds of drop tests performed from a height of 1.0 m above the ground |

| | | | | | |
|---|---|---|---|---|---|
| Note: "/" means no value. | | | | | |

As can be seen from Table 1, when 0.05 ≤ L1/L2 ≤ 0.20, the drop test pass rate is improved; and when 0.05 ≤ W1/W2 ≤ 0.20, the drop test pass rate is improved.

**Table 2**

| | S1/S2 | S1 | S₂ | Percentage of lithium plating area of negative electrode plate | Drop test result |
|---|---|---|---|---|---|
| Embodiment 1 | 0.1 | 320 | 3200 | 2.6% | No smoke or electrolyte leakage occurs |
| | | | | | over 5 rounds of drop tests performed from a height of 1.8 m above the ground |
| Embodiment 2 | 0.4 | 1280 | 3200 | 0.3% | No smoke or electrolyte leakage occurs over 5 rounds of drop tests performed from a height of 1.5 m above the ground |
| Embodiment 3 | 0.7 | 2240 | 3200 | 0.0% | No smoke or electrolyte leakage occurs over 4 rounds of drop tests performed from a height of 1.5 m above the ground |
| Embodiment 4 | 0.08 | 256 | 3200 | 8.8% | No smoke or electrolyte leakage occurs over 6 rounds of drop tests performed from a height of 1.8 m above the ground |
| Embodiment 5 | 0.75 | 2400 | 3200 | 0.0% | No smoke or electrolyte leakage occurs over 2 rounds of drop tests performed from a height of 1.0 m above the ground |

As can be seen from Table 2, with the increase of S1/S2, the lithium plating problem is alleviated, but the drop test pass rate is decreased. For example, when S1/S2 ≥ 0.1, the lithium plating problem of the negative electrode plate is improved; and when S1/S2 ≤ 0.7, the drop test pass rate is improved.

Although this application has been described with reference to preferred embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A secondary battery (100), wherein the secondary battery (100) comprises:
a housing (10);
an electrode assembly (20), wherein the electrode assembly (20) is disposed in the housing (10), and the electrode assembly (20) comprises a positive electrode plate, a negative electrode plate, and a separator; and the separator is configured to separate the positive electrode plate from the negative electrode plate;
a heat shrink film (30), disposed in the housing (10), wherein the heat shrink film (30) wraps around the electrode assembly (20), a part of the heat shrink film (30) is bonded to an inner wall of the housing (10), and one side, oriented toward the electrode assembly (20), of the heat shrink film (30) is free of an adhesive layer.

2. The secondary battery (100) according to claim 1, wherein the secondary battery (100) further comprises an adhesive member (40), and the heat shrink film (30) is connected to the inner wall of the housing (10) by the adhesive member (40).

3. The secondary battery (100) according to claim 2, wherein the adhesive member (40) comprises a substrate layer (41), a first adhesive layer (42), and a second adhesive layer (43); the first adhesive layer (42) and the second adhesive layer (43) are located on two sides of the substrate layer (41) respectively in a thickness direction (Z) thereof; the first adhesive layer (42) connects the heat shrink film (30) and the substrate layer (41); and the second adhesive layer (43) connects the substrate layer (41) and the inner wall of the housing (10).

4. The secondary battery (100) according to claim 1, wherein an outer surface of the heat shrink film (30) is provided with an adhesive layer, and the adhesive layer is bonded to the inner wall of the housing (10).

5. The secondary battery (100) according to claim 1, wherein the housing (10) is a packaging pouch, the packaging pouch comprises a sealing layer, and the heat shrink film (30) is heat-seal bonded to the sealing layer.

6. The secondary battery (100) according to claim 1, wherein the heat shrink film (30) is provided with a plurality of through-holes (31), and the plurality of through-holes (31) are spaced apart.

7. The secondary battery (100) according to claim 6, wherein the secondary battery (100) satisfies at least one of the following conditions:
1) the through-holes (31) are circular holes, and a diameter of each through-hole (31) is D, satisfying: 1 mm ≤ D ≤ 10 mm;
2) a distance between two adjacent through-holes (31) is P, satisfying: 2 mm ≤ P ≤ 20 mm; or
3) a total area of the through-holes (31) is S1, and an area of the heat shrink film (30) is S2, satisfying: 0.1 ≤ S1/S2 ≤ 0.7.

8. The secondary battery (100) according to claim 1, wherein the heat shrink film (30) is provided with a notch (32), and a corner (21) of the electrode assembly (20) is exposed through the notch (32).

9. The secondary battery (100) according to claim 8, wherein the secondary battery (100) satisfies at least one of the following conditions:
1) along a length direction (X) of the electrode assembly (20), a length of the notch (32) is L1, and a length of the electrode assembly (20) is L2, satisfying: 0.05 ≤ L1/L2 ≤ 0.20; or
2) along a width direction (Y) of the electrode assembly (20), a width of the notch (32) is W1, and a width of the electrode assembly (20) is W2, satisfying: 0.05 ≤ W1/W2 ≤ 0.20.

10. The secondary battery (100) according to claim 1, wherein a material of the heat shrink film (30) comprises one or more of a polyvinyl chloride-based material, a polyolefin-based material, a polyester-based material, a polyamide-based material, or a fluoropolymer-based material.

11. The secondary battery (100) according to claim 1, wherein a thickness of the heat shrink film (30) is H, satisfying: 0.013 mm ≤ H ≤ 0.130 mm.

12. An electrical device, wherein the electrical device comprises the secondary battery (100) according to any one of claims 1 to 11.
